# EUROPEAN PATENT APPLICATION

(11) **EP 3 733 513 A1**
(43) Date of publication of application: **04.11.2020**
(21) Application number: 18894198.3
(22) Date of filing: 08.11.2018
(51) Int. Cl.: B64D 1/18, H02K 7/00, A01M 7/00

(54) **DRIVING DEVICE, SPRAYING DEVICE, AND UNMANNED AERIAL VEHICLE**

(30) Priority: 25.12.2017 CN 201711424888
(71) Applicant: Guangzhou Xaircraft Technology Co., Ltd, Tianhe District Guangzhou, Guangdong 510000 (CN)
(72) Inventor: HE, Jianbing, Guangzhou, Guangdong 510000 (CN); PENG, Bin, Guangzhou, Guangdong 510000 (CN); XIAO, Dingfeng, Guangzhou, Guangdong 510000 (CN); TAN, Yahui, Guangzhou, Guangdong 510000 (CN)
(74) Representative: Perronace, Andrea
(86) International application number: PCT/CN2018/114562
(87) International publication number: WO 2019/128486

(57) **Abstract**

A driving device, a spraying device having the driving device, and an unmanned aerial vehicle having the spraying device are provided. The driving device includes a driving assembly and an abutting assembly. The driving assembly includes a driving motor (31). The driving motor (31) has a driving shaft (32). The abutting assembly is connected to the driving assembly and exerts an acting force on the driving shaft (32) to abut against the driving shaft (32).

## Description

### Technical Field

The disclosure belongs to the technical field of unmanned aerial vehicles, and more particularly relates to a driving device, a spraying device and an unmanned aerial vehicle.

### Background

In recent years, with the development of unmanned aerial vehicles (i.e., an unmanned aerial vehicle technology), due to maneuverability, fast response, unmanned flight, low operating requirements and the like, it is applied in many fields, especially in the field of agricultural plant protection. The application of plant protection unmanned aerial vehicles for spraying crops not only improves the spraying efficiency, but also effectively protects operators from being harmed by sprayed liquid chemicals.

A spraying device is an important device in the spraying operation process of a plant protection unmanned aerial vehicle, and includes: a driving device and a spraying tray. A driving motor of the driving device provides power to the spraying tray. The driving motor is housed in a housing of the driving motor. The housing is provided with a through hole. A driving shaft of the driving motor penetrates through the through hole and is fixedly connected to the spraying tray. During the operation, the driving shaft of the driving motor drives the spraying tray to rotate and spray liquid. In the conventional art, under the influence of own vibration and/or unmanned aerial vehicle vibration, the spraying tray drives the driving shaft of the driving motor to float, which causes serious wear of the driving shaft and internal windings thereof, thereby greatly shortening the service life of the driving device.

### Summary

An objective of the embodiments of the disclosure is to provide a driving device, which aims to solve the technical problems of easy wearing and low service life of a driving device in the conventional art.

The embodiments of the disclosure are implemented as follows. A driving device may include: a driving assembly and an abutting assembly. The driving assembly may include a driving motor. The driving motor may have a driving shaft. The abutting assembly may be connected to the driving assembly and may exert an acting force on the driving shaft to abut against the driving shaft.

As a preferred technical solution of the embodiments of the disclosure:
Optionally, the abutting assembly may include a first abutting member, the first abutting member being connected to the driving motor or a housing of the driving motor.

Optionally, the first abutting member may include a fixing portion and an abutting portion, the fixing portion being connected to the driving motor or a housing of the driving motor, and the abutting portion abutting against the driving shaft.

Optionally, the first abutting member may further include a connecting portion for connecting the fixing portion and the abutting portion, the connecting portion and the abutting portion may jointly form an arched structure, and the abutting portion, the fixing portion and the connecting portion may be integrally formed.

Optionally, the abutting portion may be provided with an elastic abutting piece.

Optionally, the abutting portion may be provided with an extending hole, the elastic abutting piece being formed by extending along an inner wall of the extending hole.

Optionally, the abutting assembly may further include a second abutting member, the second abutting member being buckled on an end of the driving shaft adjacent to the first abutting member.

Optionally, an end of the second abutting member adjacent to the first abutting member may be formed as an arc surface, the first abutting member abutting against and being in point contact with the arc surface.

Optionally, the abutting assembly may include a third abutting member, a first magnetic member and a second magnetic member, the first abutting member may be connected to the driving motor or a housing of the driving motor, the first magnetic member may be arranged on a side of the third abutting member facing the driving shaft, and the second magnetic member may be connected to the driving shaft.

Optionally, the abutting assembly may include a third magnetic member and a fourth magnetic member, the first magnetic member may be arranged on the driving motor or a housing of the driving motor, and the second magnetic member may be connected to the driving shaft and arranged along a circumferential direction of the driving shaft.

Optionally, the driving assembly may further include a mounting column connected to the driving shaft, the second magnetic member being arranged on the mounting column and opposite to the first magnetic member.

Optionally, the abutting assembly may include a bearing and an elastic member, an inner ring of the bearing may be fixedly connected to the driving shaft, and an outer ring of the bearing may be connected to the driving motor or a housing of the driving motor through the elastic member.

Optionally, the elastic member may be a spring, one end of the spring may be connected to the driving motor or the housing of the driving motor, and the other end may be connected to the outer ring of the bearing.

Another objective of the embodiments of the disclosure is to provide a spraying device, which may include the foregoing driving device.

Another objective of the embodiments of the disclosure is to provide an unmanned aerial vehicle, which may include the foregoing spraying device.

The technical effects of the embodiments of the disclosure relative to the conventional art are as follows. An acting force is exerted on the driving shaft by the abutting assembly to abut against the driving shaft. In this way, when a spraying tray is vibrated, the driving shaft of the driving device is prevented from being driven to float along an axial direction, thereby avoiding serious wear of the driving shaft and internal windings thereof, so that the driving device has a long service life, the driving shaft of the driving device has small floating, and the spraying device has a good spraying effect.

Since the spraying device and the unmanned aerial vehicle according to the embodiments of the disclosure use the above abutting assembly, the driving shaft has small floating by means of the abutting assembly, the spraying device has a good spraying effect, and the service life of the device is prolonged.

### Brief Description of the Drawings

In order to more clearly illustrate the technical solutions in the embodiments of the disclosure, the drawings used in the description of the embodiments of the disclosure or the conventional art will be briefly described below. It is apparent that the drawings in the following description are only some embodiments of the disclosure, and other drawings can be obtained from those skilled in the art according to these drawings without any creative work.
Fig. 1 is a stereogram of a spraying device according to a first embodiment of the disclosure;
Fig. 2 is a cross-sectional view taken along A-A of Fig. 1 according to an embodiment of the disclosure;
Fig. 3 is a schematic structural diagram of a first abutting member according to a first embodiment of the disclosure;
Fig. 4 is a schematic structural diagram of a second abutting member according to a first embodiment of the disclosure;
Fig. 5 is a schematic structural diagram of a housing according to a first embodiment of the disclosure;
Fig. 6 is a schematic structural diagram of a shell cover according to a first embodiment of the disclosure;
Fig. 7 is a schematic structural diagram of a connecting column according to a first embodiment of the disclosure;
Fig. 8 is a schematic structural diagram of a spraying tray according to a first embodiment of the disclosure;
Fig. 9 is a schematic structural diagram of a flow guide member according to a first embodiment of the disclosure;
Fig. 10 is a cross-sectional view of a spraying device according to a second embodiment of the disclosure;
Fig. 11 is a schematic structural diagram of a third abutting member according to a second embodiment of the disclosure;
Fig. 12 is a schematic structural diagram of a mounting column according to a second embodiment of the disclosure;
Fig. 13 is a schematic structural diagram of a spraying device according to a third embodiment of the disclosure; and
Fig. 14 is a schematic structural diagram of a spraying device according to a fourth embodiment of the disclosure.

### Description of the reference signs:

In the drawing: 11, first abutting member; 111, fixing portion; 112, abutting portion; 1120, extending hole; 1121, elastic abutting piece; 113, connecting portion; 1130, avoidance hole; 12, second abutting member; 13, third abutting member; 130, first mounting groove; 14, first magnetic member; 15, second magnetic member; 16, third magnetic member; 17, fourth magnetic member; 18, elastic member; 19, bearing; 20, spraying tray; 21, matching hole; 31, driving motor; 32, driving shaft; 321, first end; 322, second end; 33, mounting column; 330, second mounting groove; 40, housing; 41, main shell; 410, housing cavity; 411, first connecting portion; 412, second connecting portion; 413, groove; 42, auxiliary shell; 420, via hole; 43, shell cover; 431, sealing protrusion; 432, connection port; 50, connecting column; 51, first column section; 52, second column section; 53, convex ring; 60, flow guide member; 61, flow guide cavity; 70, liquid collecting conduit.

### Detailed Description of the Embodiments

The embodiments of the disclosure are described in detail below, and the examples of the embodiments are illustrated in the drawings, where the same or similar reference numerals are used to refer to the same or similar elements or elements having the same or similar functions. The embodiments described below with reference to the drawings are intended to be illustrative of the disclosure and are not to be construed as limiting the disclosure.

In the description of the disclosure, it is to be understood that the orientations or positional relationships indicated by terms "length", "width", "upper", "lower", "front", "rear", "left", "right", "vertical", "horizontal", "top", "bottom", "inner", "outer" and the like are the orientations or positional relationships shown in the drawings, and are only for the convenience of describing the disclosure and simplifying the description, rather than indicating or implying that devices or elements must have a specific orientation and must be constructed and operated in a specific orientation, and therefore it should not be construed as limiting the disclosure.

In addition, terms "first" and "second" are only adopted for description and should not be understood to indicate or imply relative importance or implicitly indicate the number of indicated technical features. Therefore, a feature defined by "first" and "second" may explicitly or implicitly indicate inclusion of one or more of such features. In the descriptions of the disclosure, "multiple" means two or more, unless otherwise limited definitely and specifically.

In the embodiments of the disclosure, unless otherwise specified and limited, terms "mounting", "connected" and "connection", "fixed" and the like should be generally understood. For example, the term may be fixed connection or detachable connection or integral connection, the term may be mechanical connection or electrical connection, and the term may be direct connection or indirect connection through an intermediate or communication inside two elements or interaction between two elements. Those of ordinary skill in the art can understand specific implications of the above terms in the embodiments of the disclosure in specific situations.

In order to make the purposes, technical solutions and advantages of the disclosure clearer, the disclosure will be further described in detail below with reference to the accompanying drawings and embodiments.

The embodiments of the disclosure provide a driving device, a spraying device and an unmanned aerial vehicle. A driving shaft 32 has small floating by means of an abutting assembly, a spraying device has a good spraying effect, and the service life of the device is prolonged.

### First Embodiment

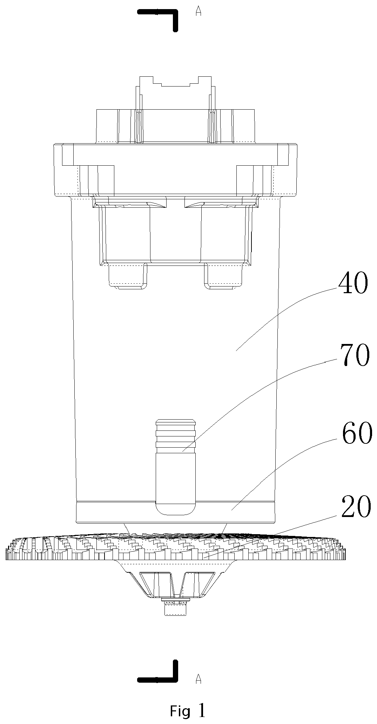

Referring to Fig. 1 to Fig. 9, a driving device includes: a driving assembly and an abutting assembly. The driving assembly includes a driving motor 31. The driving motor 31 has a driving shaft 32. The abutting assembly is connected to the driving assembly and exerts an acting force on the driving shaft 32 to abut against the driving shaft 32.

In some embodiments of the disclosure, an acting force generated by the driving device is exerted on the driving shaft 32 by the abutting assembly to abut against the driving shaft 32. In this way, floating of the driving shaft 32 along an axial direction is prevented or reduced, thereby avoiding wear of the driving shaft 32 and internal windings thereof, so that the service life of the driving device is prolonged, the driving shaft 32 of the driving device has small floating, and the spraying device has a good spraying effect.

In some embodiments, the driving assembly further includes a housing 40 of the driving motor. The housing 40 of the driving motor has a housing cavity 410 configured to house the driving motor 31. The housing 40 is provided with a through hole. The driving shaft 32 penetrates through the through hole. Specifically, the driving shaft 32 includes a first end 321 and a second end 322 extending along both sides of the driving motor. The first end 321 of the driving shaft 32 penetrates through the through hole.

Preferably, the abutting assembly includes a first abutting member 11. The first abutting member 11 is connected to the housing 40 of the driving motor. Specifically, the first abutting member 11 includes a fixed portion 111 and an abutting portion 112. The fixing portion 111 is connected to the housing 40 of the driving motor. The abutting portion 112 abuts against the driving shaft 32 to exert an acting force in an axial direction on the driving shaft 32.

In other embodiments, the first abutting member 11 may also be connected to the driving motor 31. The fixing portion 111 of the first abutting member 11 may be connected to the driving motor 31.

Optionally, the first abutting member 11 further includes a connecting portion 113 connecting the fixing portion 111 and the abutting portion 112. The connecting portion 113 and the abutting portion 112 jointly form an arched structure. The abutting portion 112, the fixing portion 111 and the connecting portion 113 are integrally formed. Specifically, the connecting portion 113 includes a first connecting portion and a second connecting portion respectively connected to two opposite sides of the abutting portion 112. The fixing portion 111 includes a first fixing portion connected to the first connecting portion and configured to be fixed with the housing 40 of the driving motor or one side of the driving motor 31 and a second fixing portion connected to the second connecting portion and configured to be fixed with the housing 40 of the driving motor or the other side of the driving motor 31. The first connecting portion, the abutting portion 112 and the second connecting portion jointly form an arched structure.

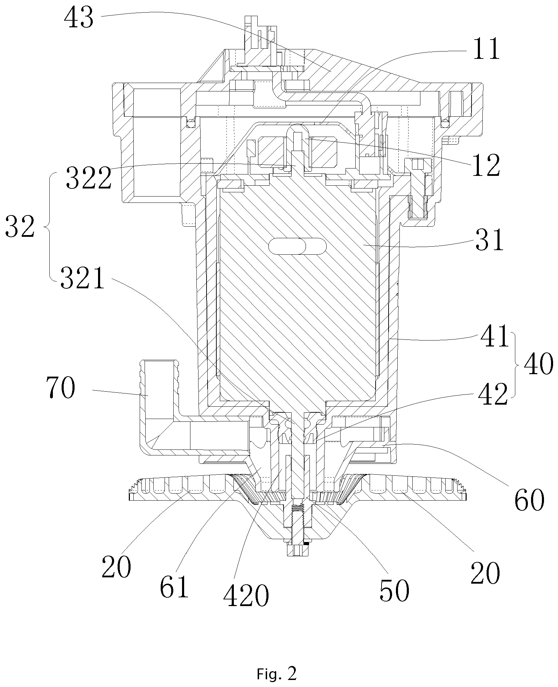

Preferably, referring to Fig. 2 to Fig. 3, the abutting portion 112 of the first abutting member 10 is provided with an elastic abutting piece 1121. The elastic abutting piece 1121 abuts against the driving shaft 32. Therefore, when the axial floating amplitude of the driving shaft 32 is too large, the arrangement of the elastic abutting piece 1121 may prevent the transition abutment between the driving shaft 32 and the first abutting member 11, resulting in excessive friction between the driving shaft 32 and the first abutting member 10, and increasing the energy consumption of the driving motor.

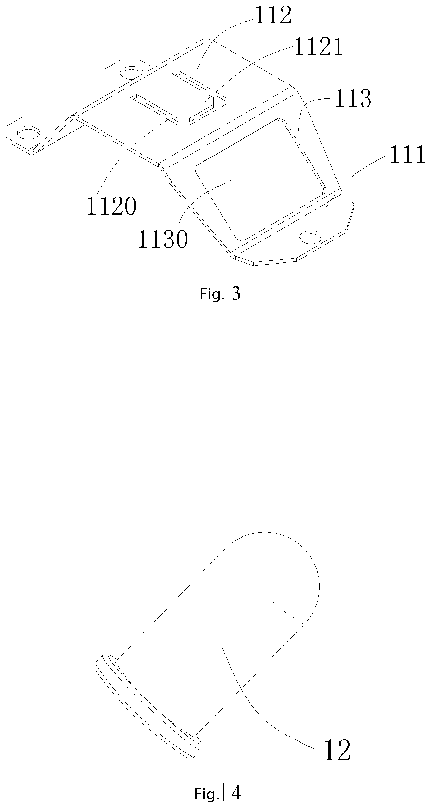

Referring to Fig. 3, in detail, the abutting portion 112 is provided with an extending hole 1120, and the elastic abutting piece 13 extends along an inner wall of the extending hole 1120.

Optionally, the connecting portion 113 of the first abutting member 11 is further provided with an avoidance hole 1130, and the avoidance hole 1130 may be used for a connection wire of the driving motor 31 to pass through.

Referring to Fig. 2 and Fig. 4, in detail, the abutting assembly further includes a second abutting member 12 buckled on the second end 322 of the driving shaft 32. An end of the second abutting member 12 away from the driving shaft 32 is formed as an arc surface. The elastic abutting piece 1121 may abut against the arc surface of the second abutting member 12, and the elastic abutting piece 1121 may be in point contact with the arc surface of the second abutting member 12, so as to reduce friction, and reduce energy consumption.

The embodiments of the disclosure further provide a spraying device, which includes: the foregoing driving device and a spraying tray 20 configured to spray liquid. The first end 321 of the driving shaft 32 penetrates through a through hole and is fixedly connected to the spraying tray 20 to enable the driving motor to power the spraying tray 20. In detail, the spraying tray 20 is a centrifugal spraying tray 20, and the spraying tray 20 is driven to rotate by the driving shaft 32, so that liquid in the spraying tray 20 is sprayed with a centrifugal channel on the spraying tray 20. Understandably, the spraying tray 20 is provided with multiple spaced-apart centrifugal channels along its tray surface, and the liquid is sprayed along the centrifugal channels.

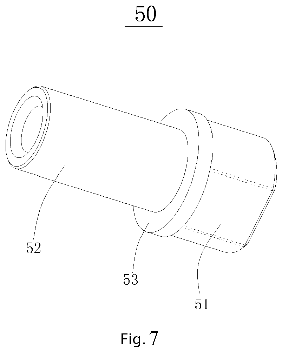

Referring to Fig. 2 and Fig. 7, optionally, the spraying device further includes a connecting column 50 fixedly connected between the spraying tray 20 and the driving shaft 32. The spraying device is provided with the connecting column 50 so that the spraying tray 20 and the driving shaft 32 are fixedly connected. Thus, the driving motor 31 drives the spraying tray 20 to rotate, so that the cooperation between the driving shaft 32 and the connecting column 50 is more tight and reliable.

With continued reference to Fig. 2 and Fig. 7, optionally, the connecting column 50 includes a first column section 51 fixedly connected to the spraying tray 20 and a second column section 52 fixedly connected to the driving shaft 32. The second column section 52 is provided with an insertion hole. The driving shaft 32 is inserted and fixed in the insertion hole. The second column section 52 is tightly matched with the driving shaft 32 to ensure that the spraying tray 20 rotates with the driving shaft 32. Understandably, the first column section 51 and the second column section 52 are integrally formed. Preferably, the first column section 51 and the second column section 52 are arranged coaxially, and are arranged coaxially with the driving shaft 32.

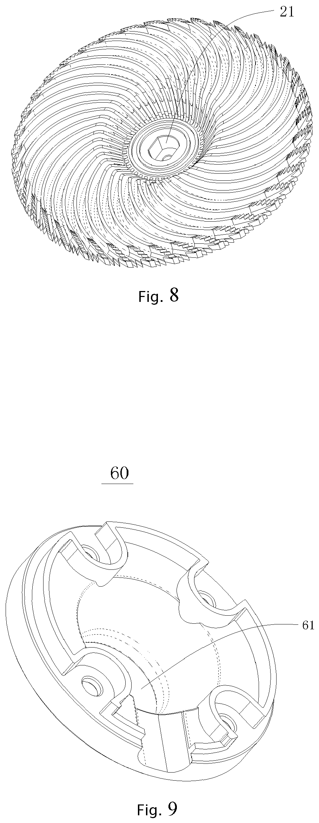

Referring to Fig. 2 and Fig. 8, optionally, the spraying tray 20 is provided with a matching hole 21. The connecting column 50 is further formed with a convex ring 53 along the outer peripheral surface. The first column section 51 is fixed in the matching hole 21. The end surface of the convex ring 53 abuts against the end surface of the matching hole 21. Meanwhile, a matching surface between the first column section 51 and the matching hole 21 is provided as a flat surface to prevent relative rotation between the first column section 51 and the spraying tray 20.

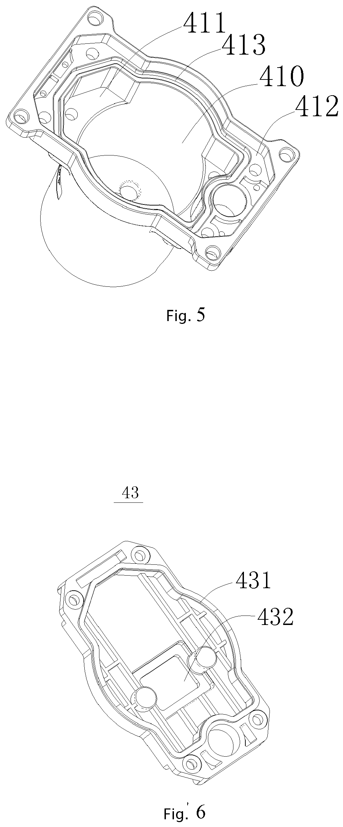

In addition, referring to Fig. 2 and Fig. 5, in this embodiment, the housing 40 of the driving motor includes a main shell 41 fixedly mounted and configured to house the driving motor 31, and an auxiliary shell 42 extending along the periphery of the through hole to the spraying tray 20. The main shell 41 is provided with a housing cavity 410 for housing the driving motor 31. The auxiliary shell 42 is provided with a via hole 420 that communicates with the housing cavity 410 and is configured for the driving shaft 32 to be inserted therein. Preferably, the main shell 41 and the auxiliary shell 42 are integrally formed.

Referring to Fig. 5, optionally, a first connecting portion 411 is formed on the top of the main shell 41 in a radial direction, and the fixing portion of the first abutting member 11 is connected to the first connecting portion 411.

Referring to Fig. 2 and Fig. 6, optionally, a second connecting portion 412 is formed by extending on the top of the first connecting portion 411 in a radial direction. A shell cover 43 is connected to the second connecting portion 412. A sealing protrusion 431 is arranged on the edge of the shell cover 43. An assembly groove 413 is provided at the second connecting portion 412. The sealing protrusion 431 is inserted into the assembly groove 413 to form a sealed mounting space. Optionally, the shell cover 43 is provided with a connection port 432. The connection port 432 is suitable for mounting an electrical circuit board. The electrical circuit board is suitable for electrically connecting the driving assembly 31 with a power supply circuit. The electrical circuit board may be sealed in a glue filling manner.

Referring to Fig. 2 and Fig. 9, optionally, the spraying device further includes a flow guide member 60 and a liquid collecting conduit 70. The flow guide member 60 is fixedly connected between the main shell 41 and the spraying tray 20 and forms a flow guide cavity 61 communicating with the spraying tray 20. A mounting opening communicating with the flow guide cavity 61 is formed between the flow guide member 60 and the main shell 41. A liquid conduit is fixedly mounted on the mounting opening and communicates with the flow guide cavity 61.

### Second Embodiment

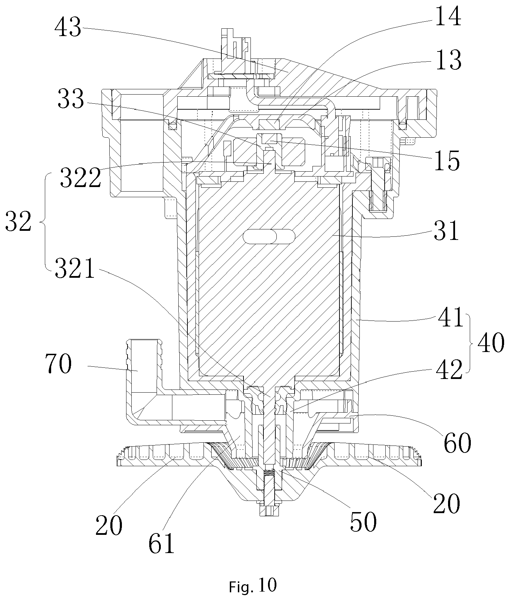

Referring to Fig. 10 to Fig. 12, the other aspects of the disclosure are the same as the first embodiment. The driving device provided by the present embodiment is different from the first embodiment only in that the abutting assembly in the present embodiment includes a third abutting member 13, a first magnetic member 14 and a second magnetic member 15. Specifically, the third abutting member 13 is connected to the driving motor 31 or the housing 40 of the driving motor, the first magnetic member 14 is arranged on a side of the third abutting member 13 facing the driving shaft 32, the second magnetic member 15 is connected to the driving shaft 32, and the first magnetic member 14 is opposite to the second magnetic member 15. Under the action of force generated by the first magnetic member 14 and the second magnetic member 15, an axial force is exerted on the driving shaft 32 to prevent the driving shaft 32 from floating in the axial direction during the process of driving the spraying tray 20 to rotate.

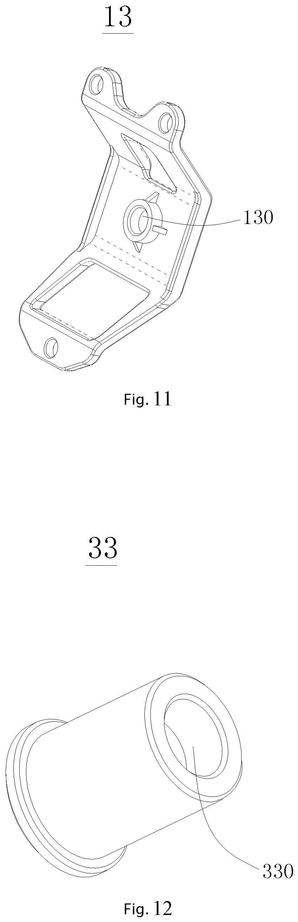

Referring to Fig. 11 and Fig. 12, a side of the third abutting member 13 facing the driving shaft 32 is provided with a first mounting groove 130. The first magnetic member 14 is mounted in the first mounting groove 130. Preferably, the driving assembly 31 further includes a mounting column 33. The mounting column 33 is connected to the driving shaft 32. The mounting column 33 is provided with a second mounting groove 330. The second magnetic member 15 is mounted in the second mounting groove 330 and is opposite to the first magnetic member 14.

In the present embodiment, the third abutting member 13 is connected to the housing 40 of the driving motor, and the mounting column 33 is fixedly connected to the second end 322 of the driving shaft 32.

In addition, it is also to be noted that the structure of the third abutting member 13 in the present embodiment is the same as the structure of the first abutting member 11 in the first embodiment, except in the abutting portion of the third abutting member 13 and the abutting portion 112 of the first abutting member 11. The same portions are not described here again. In the present embodiment, a side of the abutting portion of the third abutting member 13 facing the driving shaft 32 is provided with a first mounting groove 130.

Preferably, the first magnetic member 14 and the second magnetic member 15 may be the same.

### Third Embodiment

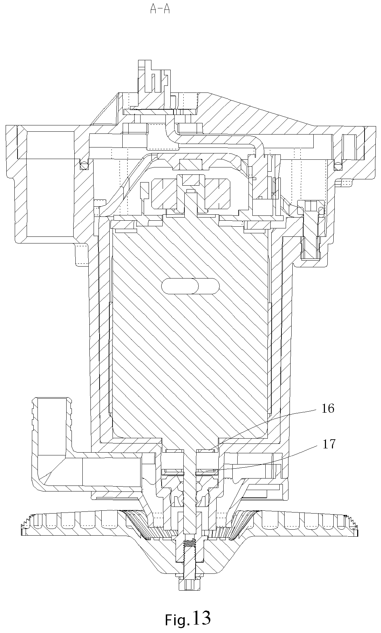

Referring to Fig. 13, the other aspects of the disclosure are the same as the first embodiment. The driving device provided by the present embodiment is different from the first embodiment only in that the abutting assembly in the present embodiment includes a third magnetic member 16 and a fourth magnetic member 17. The third magnetic member 16 is arranged on the driving motor 31 or the housing 40 of the driving motor. The fourth magnetic member 17 is connected to the driving shaft 32 and arranged along the circumferential direction of the driving shaft 32. The third magnetic member 16 and the fourth magnetic member 17 are oppositely disposed and generate a force, and then generate a force on the driving shaft 32 to abut against the driving shaft 32 and prevent the driving shaft 32 from floating up and down in the axial direction.

In the present embodiment, the fourth magnetic member 17 is arranged at the first end 321 of the driving shaft 32, the third magnetic member 16 is arranged on an end surface of the driving motor on the side of the first end 321 of the driving shaft 32 and arranged along the circumferential direction of the driving shaft 32, and the third magnetic member 16 and the fourth magnetic member 17 are oppositely arranged and generate a force.

Understandably, the fourth magnetic member 17 may be arranged at the second end 322 of the driving shaft 32, and the third magnetic member 16 may be arranged on the end surface of the driving motor on the side of the second end 322 of the driving shaft 32.

### Fourth Embodiment

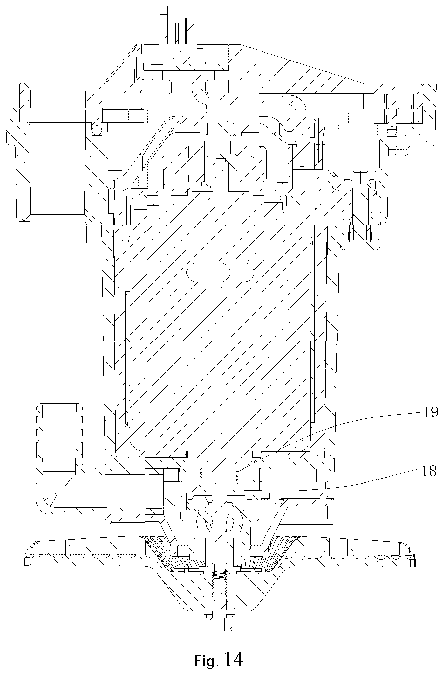

Referring to Fig. 14, the other aspects of the disclosure are the same as the first embodiment. The driving device provided by the present embodiment is different from the first embodiment only in that the abutting assembly in the present embodiment includes a bearing 18 and an elastic member 19. An inner ring of the bearing 18 is fixedly connected to the driving shaft 32. An outer ring of the bearing 18 is connected to the driving motor 31 or the housing 40 of the driving motor through the elastic member 19. The elastic member 19 exerts an acting force on the outer ring of the bearing 18, which in turn exerts an acting force on the driving shaft 32 to abut against the driving shaft 32 and prevent the driving shaft 32 from floating up and down in the axial direction.

In the present embodiment, the inner ring of the bearing 18 is fixedly connected to the first end 321 of the driving shaft 32, one end of the elastic member 19 is fixed to the driving motor 31, and the other end of the elastic member 19 is fixedly connected to the outer ring of the bearing 18.

Understandably, in other embodiments, the inner ring of the bearing 18 may be connected to the second end 322 of the driving shaft 32. The outer ring of the bearing 18 is connected to the driving motor 31 or the housing 40 of the driving motor through the elastic member 19.

Optionally, the elastic member is provided as a spring. One end of the spring is connected to the driving motor or the housing of the driving motor, and the other end of the spring is connected to the outer ring of the bearing 18.

The above is only the preferred embodiment of the disclosure and is not intended to limit the disclosure. Any modifications, equivalent replacements, improvements and the like made within the spirit and principle of the disclosure shall fall within the scope of protection of the disclosure.

## Claims

1. A driving device, comprising: a driving assembly and at least one abutting assembly, wherein the driving assembly comprises a driving motor, the driving motor has a driving shaft, and the abutting assembly is connected to the driving assembly and exerts an acting force on the driving shaft to abut against the driving shaft.

2. The driving device according to claim 1, wherein the abutting assembly comprises a first abutting member, the first abutting member being connected to the driving motor or a housing of the driving motor.

3. The driving device according to claim 2, wherein the abutting assembly comprises a fixing portion and an abutting portion, the fixing portion being connected to the driving motor or a housing of the driving motor, and the abutting portion abutting against the driving shaft.

4. The driving device according to claim 3, wherein the first abutting member comprises a connecting portion for connecting the fixing portion and the abutting portion, the connecting portion and the abutting portion jointly form an arched structure, and the abutting portion, the fixing portion and the connecting portion are integrally formed.

5. The driving device according to claim 4, wherein the abutting portion is provided with an elastic abutting piece.

6. The driving device according to claim 5, wherein the abutting portion is provided with an extending hole, the elastic abutting piece being formed by extending along an inner wall of the extending hole.

7. The driving device according to any one of claims 2 to 6, wherein the abutting assembly comprises a second abutting member, the second abutting member being buckled on an end of the driving shaft adjacent to the first abutting member.

8. The driving device according to claim 7, wherein an end of the second abutting member adjacent to the first abutting member is formed as an arc surface, and the first abutting member abuts against and is in point contact with the arc surface.

9. The driving device according to claim 1, wherein the abutting assembly comprises a third abutting member, a first magnetic member and a second magnetic member, the first abutting member is connected to the driving motor or a housing of the driving motor, the first magnetic member is arranged on a side of the third abutting member facing the driving shaft, and the second magnetic member is connected to the driving shaft.

10. The driving device according to claim 9, wherein the driving assembly comprises a mounting column connected to the driving shaft, the second magnetic member being arranged on the mounting column and opposite to the first magnetic member.

11. The driving device according to claim 1, wherein the abutting assembly comprises a third magnetic member and a fourth magnetic member, the first magnetic member is arranged on the driving motor or a housing of the driving motor, and the second magnetic member is connected to the driving shaft and arranged along a circumferential direction of the driving shaft.

12. The driving device according to claim 1, wherein the abutting assembly comprises a bearing and an elastic member, an inner ring of the bearing is fixedly connected to the driving shaft, and an outer ring of the bearing is connected to the driving motor or a housing of the driving motor through the elastic member.

13. The driving device according to claim 12, wherein the elastic member is a spring, one end of the spring is connected to the driving motor or the housing of the driving motor, and the other end is connected to the outer ring of the bearing.

14. A spraying device, comprising the driving device according to any one of claims 1 to 13.

15. An unmanned aerial vehicle, comprising the spraying device according to claim 14.
